# EUROPEAN PATENT APPLICATION

(11) **EP 2 385 055 A1**
(43) Date of publication of application: **09.11.2011**
(21) Application number: 09836226.2
(22) Date of filing: 24.12.2009
(51) Int. Cl.: C07F 7/18

(54) **ORGANOSILICON COMPOUND AND PROCESS FOR PRODUCING SAME**

(30) Priority: 29.12.2008 JP 2008335799
(71) Applicant: Dow Corning Toray Co., Ltd., Tokyo 100-0005 (JP)
(72) Inventor: IWAI, Makoto, Ichihara-shi Chiba 299-0108 (JP); TANIGUCHI, Yoshinori, Ichihara-shi Chiba 299-0108 (JP)
(74) Representative: Gillard, Richard Edward
(86) International application number: PCT/JP2009/071885
(87) International publication number: WO 2010/076891

(57) **Abstract**

A hydrolyzable group-containing organosilicon compound represented by the general formula

XCH₂Si(OSiYₘR²₃₋ₘ)ₙR¹₃₋ₙ (1)

wherein each R¹ is independently a C₁₋₂₀ hydrolyzable group, each R² is independently a C₁₋₂₀ substituted or unsubstituted monovalent hydrocarbyl group excluding groups that have an aliphatically unsaturated bond, X is a halogen atom, Y is the hydrogen atom or a C₂₋₁₈ alkenyl group, **m** is an integer from 1 to 3, and **n** is 1 or 2. The organosilicon compound of the present invention can efficiently introduce a hydrolyzable group into various compounds through the hydrosilylation reaction.

## Description

### Technical Field

The present invention relates to an organosilicon compound and a method for producing it and more particularly relates to an organosilicon compound that has a halogen-substituted methyl group and a hydrolyzable group and to a method of producing this organosilicon compound.

### Background Art

JP 2005-320519 A describes the introduction of a hydrolyzable group-containing crosslinkable silyl group into a vinyl polymer by the hydrosilylation-based addition of a hydrosilane compound that has a hydrolyzable group-containing crosslinkable silyl group. JP 08-034922 A describes a room-temperature curable silicone elastomer composition in which the base component is a dimethylpolysiloxane endblocked by the silanol group at both molecular chain terminals. This composition contains crosslinking agents in the form of an alkyltrimethoxysilane and a siloxane with the formula ViSi(OSiViMe₂)(OMe)₂ wherein Vi represents the vinyl group and Me represents the methyl group, and also contains a curing agent.

However, the dialkoxysilyl group-containing siloxane introduced in this manner has a slower hydrolysis rate than a trialkoxysilane, and this has made it difficult to obtain the intended properties.

### Disclosure of the Invention

An object of the present invention is to provide a novel organosilicon compound that is useful for the introduction of a hydrolyzable group through the hydrosilylation reaction. A further object of the present invention is to provide a method of producing this novel organosilicon compound.

Thus, the present invention relates to a hydrolyzable group-containing organosilicon compound that is represented by the following general formula

XCH₂Si(OSiYR²₂)ₙR¹₃₋ₙ (1)

wherein each R¹ is independently a C₁₋₂₀ hydrolyzable group; each R² is independently a C₁₋₂₀ substituted or unsubstituted monovalent hydrocarbyl group excluding groups that have an aliphatically unsaturated bond; X is a halogen atom; Y is the hydrogen atom or a C₂₋₁₈ alkenyl group; and **n** is 1 or 2. The present invention further relates to the partial hydrolysis and condensation product of this hydrolyzable group-containing organosilicon compound and to a method of producing this hydrolyzable group-containing organosilicon compound.

The organosilicon compound of the present invention can efficiently introduce a hydrolyzable group into various compounds through the hydrosilylation reaction. In addition, because the organosilicon compound of the present invention contains a silicon-bonded halogen-substituted methyl group, an increased hydrolysis rate can be expected for the hydrolyzable group, and, when the organosilicon compound of the present invention is used in combination with, for example, a trialkoxysilane, as a crosslinking agent for a room-temperature curable composition in which the base component is a hydroxyl-terminated polymer, a reduction in the modulus of the cured product and/or an increase in the elongation of the cured product can be expected.

### Brief Description of the Drawings

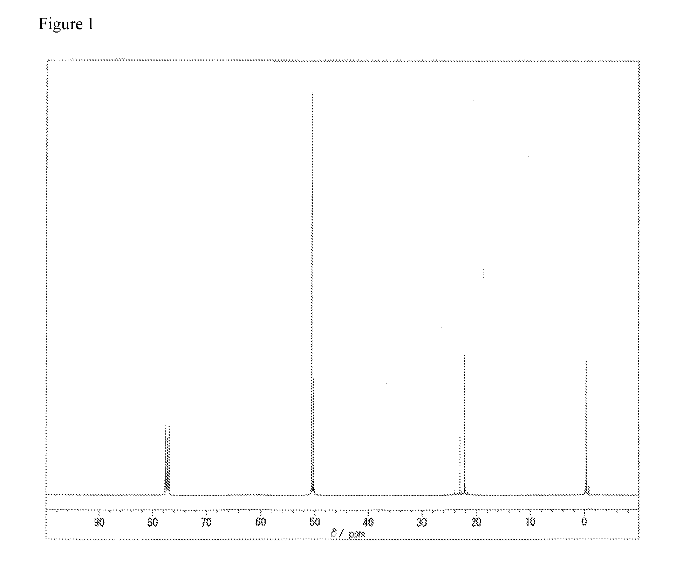

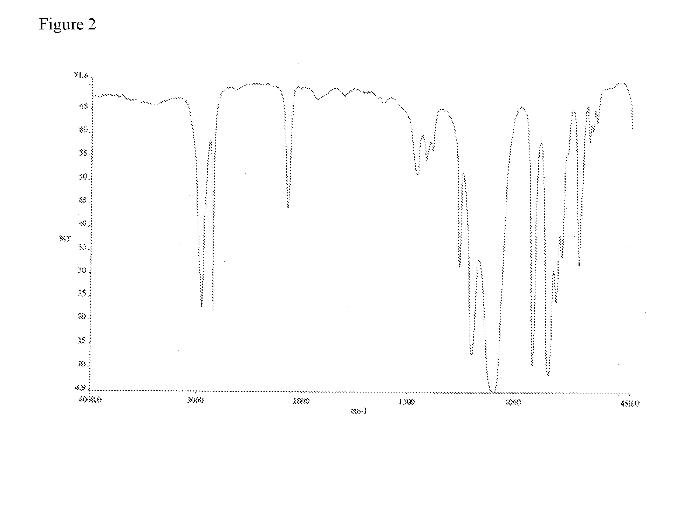

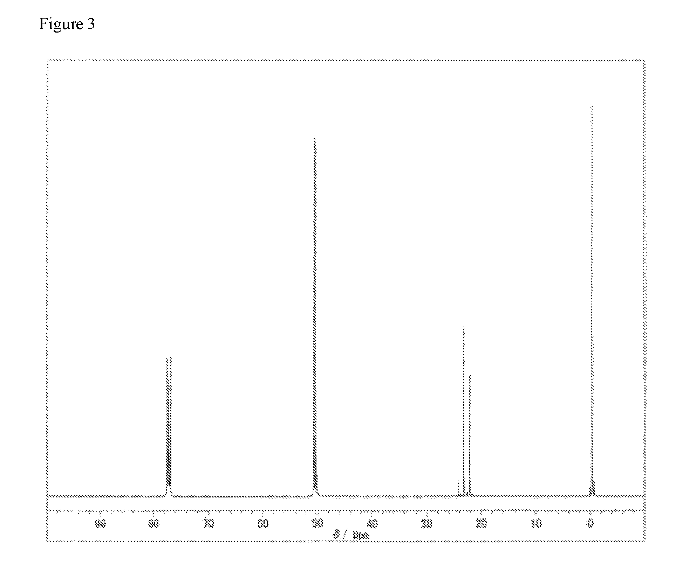

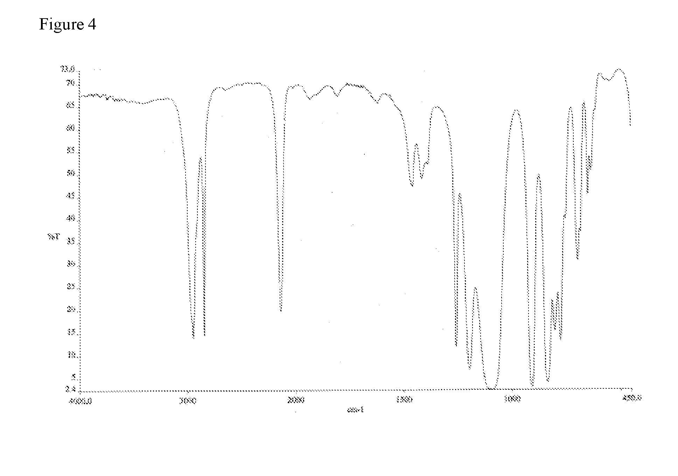

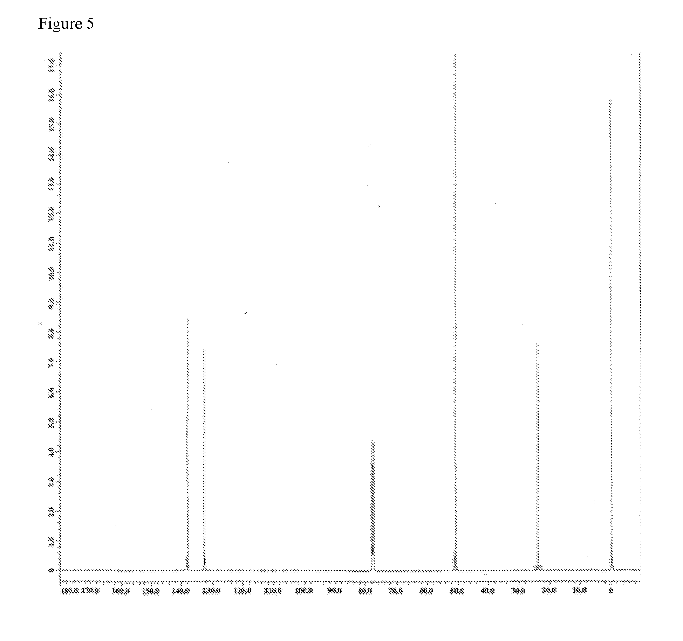

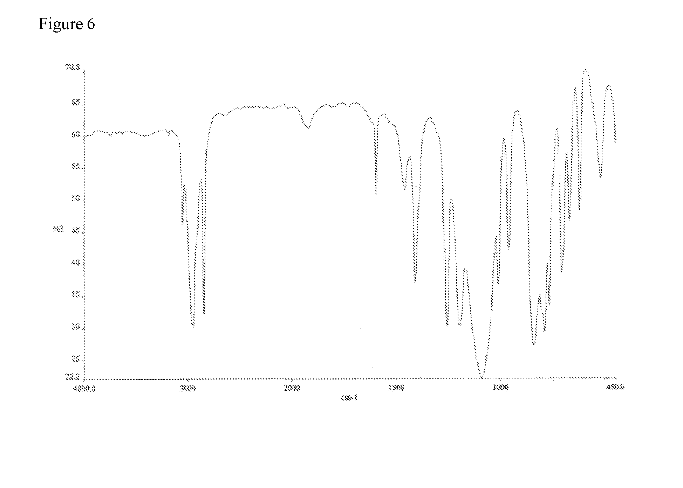

Figure 1 contains the ¹³C-NMR spectrum of a product (fraction 1) obtained in Example 1. Figure 2 contains the IR spectrum of a product (fraction 1) obtained in Example 1. Figure 3 contains the ¹³C-NMR spectrum of a product (fraction 2) obtained in Example 1. Figure 4 contains the IR spectrum of a product (fraction 2) obtained in Example 1. Figure 5 contains the ¹³C-NMR spectrum of the product obtained in Example 2. Figure 6 contains the IR spectrum of the product obtained in Example 2.

### Best Mode for Carrying Out the Invention

The present invention is more particularly described herebelow.
The organosilicon compound of the present invention is represented by the following general formula (1).

XCH₂Si(OSiYR²₂)ₙR¹₃₋ₙ (1)

Each R¹ in this formula is independently a C₁₋₂₀ hydrolyzable group and is preferably a group selected from alkoxy groups and alkoxyalkoxy groups. The C₁₋₂₀ alkoxy groups are exemplified by methoxy, ethoxy, propoxy, isopropoxy, n-butoxy, isobutoxy, sec-butoxy, t-butoxy, hexyloxy, 2-ethylhexyloxy, octyloxy, decyloxy, undecyloxy, and octadecyloxy, wherein methoxy and ethoxy are preferred. The C₁₋₂₀ alkoxyalkoxy groups are exemplified by methoxymethoxy, methoxyethoxy, ethoxymethoxy, ethoxyethoxy, methoxypropoxy, ethoxypropoxy, and propoxypropoxy, wherein methoxymethoxy and methoxyethoxy are preferred. Each R² is independently a C₁₋₂₀ monovalent hydrocarbyl group excluding groups that contain an aliphatically unsaturated bond, and can be specifically exemplified by alkyl groups such as methyl, ethyl, n-propyl, isopropyl, isobutyl, sec-butyl, t-butyl, and so forth; cycloalkyl groups such as cyclopentyl, cyclohexyl, 2-methylcyclohexyl, norbornyl, and so forth; aryl groups such as phenyl, tolyl, naphthyl, and so forth; aralkyl groups such as phenethyl and so forth; and halogenated alkyl groups such as chloromethyl, chloropropyl, 3,3,3-trifluoropropyl, and so forth. Preferred among the preceding are C₁₋₂₀ unsubstituted alkyl and aryl, wherein methyl and phenyl are particularly preferred. X is a halogen atom and is exemplified by the fluorine atom, chlorine atom, bromine atom, and iodine atom, wherein the chlorine atom is preferred. Y is the hydrogen atom or a C₂₋₁₈ alkenyl group such as vinyl, allyl, isopropenyl, hexenyl, and so forth, wherein the hydrogen atom, vinyl, and hexenyl are preferred **n** is 1 or 2 and preferably is 1, but the organosilicon compound of the present invention includes mixtures of an organosilicon compound having **n** = 1 with an organosilicon compound having **n** = 2.

The partial hydrolysis and condensation product of the organosilicon compound represented by the aforementioned general formula (1) is also useful. The partial hydrolysis and condensation product of the organosilicon compound of the present invention is not particularly limited and can be produced by adding water and a catalyst to the organosilicon compound and running a reaction. A base catalyst or an acid catalyst can be used as this catalyst, and the use of an acid catalyst is preferred.

The organosilicon compound with the aforementioned general formula (1) can be produced, for example, by reacting a hydrolyzable group-containing silane with the general formula: XCH₂SiR¹₃ wherein R¹ and X are defined as above, with an organodisiloxane with the general formula: YR²₂SiOSiYR²₂ wherein R² and Y arse defined as above. This reaction is preferably run in the presence of an acid catalyst, and this acid catalyst can be exemplified by concentrated sulfuric acid, trifluoromethanesulfonic acid, trifluoroacetic acid, hydrochloric acid, and sulfuric acid.

The hydrolyzable group-containing silane with the general formula XCH₂SiR¹₃ is reacted preferably at a ratio of 0.5 to 3.0 moles and more preferably 1.5 to 2.5 moles per 1 mole of the organodisiloxane with the general formula YR²₂SiOSiYR²₂. An esterifying agent is preferably used in order to capture the methanol that is produced as a by-product. This esterifying agent can be exemplified by carboxylic acids such as acetic acid and carboxylic acid anhydrides such as acetic anhydride, which react with the methanol to produce an alkyl carboxylate. Heating as appropriate in the temperature range from 20 to 200°C is effective for achieving a favorable reaction rate. In addition, while the use of a solvent is not particularly required in this reaction, a solvent may also be used in order to maintain a uniform reaction mixture and provide a viscosity favorable for the reaction. This solvent should not impede or inhibit the reaction of the present invention and should not itself undergo reaction, and preferred examples are saturated aliphatic hydrocarbon solvents, aromatic hydrocarbon solvents, and alkyl ether solvents. In order to avoid secondary reactions and raise the reaction efficiency, the reaction is preferably run under an inert gas such as nitrogen. The obtained organosilicon compound of the present invention can ordinarily be separated and purified from the reaction system by distillation.

The hydrolyzable group-containing silane with the aforementioned general formula XCH₂SiR¹₃ can be specifically exemplified by chloromethyltrimethoxysilane, bromomethyltrimethoxysilane, chloromethyltriethoxysilane, bromomethyltriethoxysilane, chloromethyltriisopropoxysilane, chloromethyltri-t-butoxysilane, chloromethyltris(methoxymethoxy)silane, bromomethyltris(methoxymethoxy)silane, chloromethyltris(ethoxymethoxy)silane, bromomethyltris(ethoxymethoxy)silane, chloromethyltris(methoxyethoxy)silane, bromomethyltris(methoxyethoxy)silane, and iodomethyltrimethoxysilane.

The organodisiloxane with the aforementioned general formula YR²₂SiOSiYR²₂ can be specifically exemplified by tetramethyldisiloxane, dimethyldiphenyldisiloxane, tetrakis(3,3,3-trifluoropropyl)disiloxane, 1,3-divinyltetramethyldisiloxane, 1,3-divinyldimethyldiphenyldisiloxane, 1,3-divinyltetrakis(3,3,3-trifluoropropyl)disiloxane, 1,3-dihexenyltetramethyldisiloxane, and 1,3-dihexenyldimethyldiphenyldisiloxane.

The organosilicon compound with general formula (1)

XCH₂Si(OSiYR²₂)ₙR¹₃₋ₙ (1)

can introduce a hydrolyzable group into various compounds through the hydrosilylation reaction. When Y in the aforementioned general formula (1) is the hydrogen atom, a hydrosilylation reaction can be run with a compound that contains an aliphatically unsaturated bond-containing group, e.g., an alkenyl group, in the molecule. When Y in general formula (1) is an alkenyl group, a hydrosilylation reaction can be run with a compound that contains the silicon-bonded hydrogen atom in the molecule.

The compound that contains an aliphatically unsaturated bond-containing group in the molecule can be exemplified by alkenyl-containing organopolysiloxanes, alkenyl-containing polyolefin-type compounds, alkenyl-containing polyether-type compounds, alkenyl-containing polyester-type compounds, alkenyl-containing epoxy resins, and alkenyl-containing polyurethane-type compounds

The compound that contains the silicon-bonded hydrogen atom in the molecule can be exemplified by silicon-bonded hydrogen-containing organopolysiloxanes, organohydrogensilyl-containing polyolefin-type compounds, organohydrogensilyl-containing polyether-type compounds, organohydrogensilyl-containing polyester-type compounds, organohydrogensilyl-containing epoxy resins, and organohydrogensilyl-containing polyurethane-type compounds.

The heretofore known hydrosilylation reaction catalysts can be used to run the hydrosilylation reaction between the various compounds and the organosilicon compound with the previously cited general formula (1), and the hydrosilylation reaction catalyst can be exemplified by platinum catalysts such as chloroplatinic acid, alcohol solutions of chloroplatinic acid, complex compounds between chloroplatinic acid and an olefin or a vinylsiloxane or an acetylenic compound, platinum black, and platinum carried on the surface of a solid; palladium catalysts such as tetrakis(triphenylphosphine)palladium and so forth; rhodium catalysts such as chlorotris(triphenylphosphine)rhodium and so forth; and iridium catalysts given by Ir(OOCCH₃)₃, Ir(C₅H₇O₂)₃, and so forth. Platinum catalysts are preferred thereamong. Combinations of two or more of the preceding may also be used.

The hydrosilylation reaction catalyst is used in an amount that promotes the hydrosilylation reaction, but this is not otherwise particularly limited. The hydrosilylation reaction catalyst is preferably used at a concentration of 0.000001 to 1 mol% and more preferably is used at a concentration of 0.0004 to 0.01 mol%. The reasons for this are as follows: the hydrosilylation reaction is slow and inefficient at below the lower limit on the indicated range; exceeding the upper limit on the indicated range is uneconomical.

### Examples

The present invention is specifically described by the examples that follow, but the present invention is not limited to these examples. % indicates mass% in the examples. In the formulas, Me represents the methyl group and Vi represents the vinyl group.

### Example 1

A thermometer and reflux condenser were installed on a 500 mL four-neck flask fitted with a stirrer and 50.0 g (0.372 mol) tetramethyldisiloxane, 127.0 g (0.744 mol) chloromethyltrimethoxysilane, and 0.08 g trifluoromethanesulfonic acid were introduced with stirring and heating was started. Heating was stopped once about 50°C had been reached and the dropwise addition of acetic acid (11.2 g: 0.186 mol) was started. A gentle heat evolution was seen and dropwise addition was finished at 40 to 50°C, after which heating was performed for about 2 hours holding at 45 to 55°C. Filtration was performed after neutralization with sodium bicarbonate. A vacuum distillation was then carried out at 133 Pa using a diameter 3 cm x length 30 cm glass column packed with diameter 5 mm x length 5 mm glass Raschig rings. The fraction at a temperature of 50 to 57°C was designated fraction 1. The fraction at a temperature of 57 to 59°C was designated fraction 2. Each fraction was identified using GC-MS, ¹³C-NMR, and IR, and the results of the identifications are reported in Table 1. The n in the tables refers to the n in general formula (1). Figures 1 and 2 show the ¹³C-NMR spectrum and the IR spectrum of fraction 1, respectively, while Figures 3 and 4 show the ¹³C-NMR spectrum and the IR spectrum of fraction 2, respectively.

The alkenyl group in component (A2) is the same as in the aforementioned component (A1). In addition, the non-alkenyl silicon-bonded organic groups in component (A2) are also the same as in the aforementioned component (A1).

**Table 1.**

| | yield (g) | n = 0 (%) | n = 1 (%) | n = 2 (%) | n = 3 (%) |
|---|---|---|---|---|---|
| fraction 1 | 19.7 | 58 | 38 | 3 | not detected |
| fraction 2 | 25.5 | 30 | 62 | 9 | not detected |

| | | | | | |
|---|---|---|---|---|---|
| n = 0 : ClCH₂Si(OMe)₃ n = 1 : ClCH₂Si(OSiHMe₂)(OMe)₂ n=2 : ClCH₂Si(OSiHMe₂)₂(OMe) n=3 : ClCH₂Si(OSiHMe₂)₃ | | | | | |

### Example 2

A thermometer and reflux condenser were installed on a 500 mL four-neck flask fitted with a stirrer and 56.2 g (0.302 mol) tetramethyldivinyldisiloxane, 100.0 g (0.604 mol) chloromethyltrimethoxysilane, and 0.10 g trifluoromethanesulfonic acid were introduced with stirring and heating was started. Heating was stopped once about 50°C had been reached and the dropwise addition of acetic acid (36.5 g: 0.604 mol) was started. A gentle heat evolution was seen and dropwise addition was finished at 40 to 50°C, after which heating was performed for about 30 minutes holding at 45 to 55°C. Filtration was performed after neutralization with sodium bicarbonate. A vacuum distillation was then carried out at 133 Pa using a diameter 3 cm x length 30 cm glass column packed with diameter 5 mm x length 5 mm glass Raschig rings. A 48.5 g fraction was obtained at a temperature of 84 to 86°C. The product was identified using GC-MS, ¹³C-NMR, and IR, and the product was determined to have the chemical structure shown by the formula given below. Figure 5 shows the ¹³C-NMR spectrum of this product and Figure 6 shows the IR spectrum of this product.

ClCH₂Si(OSiMe₂Vi)(OMe)₂

### Industrial Applicability

The organosilicon compound of the present invention, which is represented by the following general formula (1),

XCH₂Si(OSiYR²₂)ₙR¹₃₋ₙ (1)

can introduce a hydrolyzable group into various compounds through the hydrosilylation reaction, and, because it contains a halogen-substituted methyl group, an improved hydrolyzability can also be expected for this hydrolyzable group. Due to this, the organosilicon compound of the present invention and its partial hydrolysis and condensation product are useful as intermediates for the introduction of a hydrolyzable group by the hydrosilylation reaction, as adhesion promoters, and as silane coupling agents.

## Claims

1. A hydrolyzable group-containing organosilicon compound represented by the general formula:
XCH₂Si(OSiYₘR²₃₋ₘ)ₙR¹₃₋ₙ (1)
wherein each R¹ is independently a C₁₋₂₀ hydrolyzable group; each R² is independently a C₁₋₂₀ substituted or unsubstituted monovalent hydrocarbyl group excluding groups that have an aliphatically unsaturated bond; X is a halogen atom; Y is the hydrogen atom or a C₂₋₁₈ alkenyl group; **m** is an integer from 1 to 3; and **n** is 1 or 2.

2. A partial hydrolysis and condensation product of a hydrolyzable group-containing organosilicon compound represented by the general formula:
XCH₂Si(OSiYR²₂)ₙR¹₃₋ₙ (1)
wherein each R¹ is independently a C₁₋₂₀ hydrolyzable group; each R² is independently a C₁₋₂₀ substituted or unsubstituted monovalent hydrocarbyl group excluding groups that have an aliphatically unsaturated bond; X is a halogen atom; Y is the hydrogen atom or a C₂₋₁₈ alkenyl group; and **n** is 1 or 2.

3. A method of producing a hydrolyzable group-containing organosilicon compound represented by general formula (1):
XCH₂Si(OSiYR²₂)ₙR¹₃₋ₙ (1)
wherein each R¹ is independently a C₁₋₂₀ hydrolyzable group, each R² is independently a C₁₋₂₀ substituted or unsubstituted monovalent hydrocarbyl group excluding groups that have an aliphatically unsaturated bond, X is a halogen atom, Y is the hydrogen atom or a C₂₋₁₈ alkenyl group, and **n** is 1 or 2, said method being **characterized by** reacting a hydrolyzable group-containing alkoxysilane with the general formula: XCH₂SiR¹₃ wherein R¹ and X are defined as above, with an organodisiloxane with the general formula: YR²₂SiOSiYR²₂ wherein R² and Y are defined as above.
